# EUROPÄISCHE PATENTSCHRIFT

(11) **EP 3 104 246 B1**
(45) Veröffentlichungstag und Bekanntmachung des Hinweises auf die Patenterteilung: **11.10.2017**
(21) Anmeldenummer: 16171000.9
(22) Anmeldetag: 01.07.2014
(51) Int. Cl.: G05D 7/01, F24D 19/10, F16K 1/44, F16K 1/52

(54) **DURCHFLUSSREGELVENTIL**
FLOW CONTROL VALVE
SOUPAPE DE RÉGULATION DU DÉBIT

(30) Priorität: 22.07.2013 DE 102013107762; 07.03.2014 DE 102014103051; 04.04.2014 DE 102014004907; 04.04.2014 DE 102014004910
(43) Veröffentlichungstag der Anmeldung: 14.12.2016
(62) Teilanmeldung aus: 14766889.1
(73) Patentinhaber: Oventrop GmbH & Co. KG, 59939 Olsberg (DE)
(72) Erfinder: Löffler, Gerhard, 59939 Olsberg (DE)
(74) Vertreter: Köchling, Conrad-Joachim

(56) Entgegenhaltungen:
- EP-A1- 0 911 714
- EP-A1- 2 615 342
- EP-A2- 0 751 448
- DE-A1-102007 013 505
- DE-A1-102009 011 506
- DE-A1-102011 107 273

## Beschreibung

Die Erfindung betrifft ein Durchflussregelventil für flüssigkeitsführende Heizungs- oder Kühlanlagen, bestehend aus einem Gehäuse mit mindestens einem Einlass und mindestens einem Auslass und einem dazwischen angeordneten Anschlussstutzen, in den eine Druckregeleinrichtung, welche die Druckdifferenz zwischen den Druckbereichen vor und hinter einer im Anschlussstutzen angeordneten Durchflussreguliereinheit konstant hält, sowie eine Spindel mit aus dem Gehäuse ragendem Betätigungsteil und im Gehäuse befindlichen ersten Drosselkörper eingesetzt ist, der auf die Durchflussreguliereinheit oder auf Teile davon einwirkt.

Insbesondere betrifft die Erfindung ein dynamisch arbeitendes Durchflussregelventil, mittels dessen der Durchfluss derart geregelt wird, dass dieser unabhängig vom Differenzdruck über das gesamte Ventil konstant bleibt.

Beispielsweise ist aus der PCT/DE 2008/000669 eine Armaturenkombination zur Regelung der Durchflussmenge und/oder des Differenzdruckes in flüssigkeitsführenden Heizungs- oder Kühlanlagen bekannt, bei der in Fließrichtung des durchfließenden Mediums dem Zulaufstutzen folgend eine erste Regeleinrichtung, dann eine erste Durchflussreguliereinrichtung, dann eine zweite Durchflussreguliereinrichtung und abschließend der Ablaufstutzen folgt.

Die bekannte Armaturenkombination ist in der Herstellung aufwendig, weil in das Gehäuse die entsprechenden Komponenten eingebaut werden müssen, die vorgefertigt werden. Dies bedeutet nicht nur einen großen Fertigungsaufwand, sondern hat auch zur Konsequenz, dass das Gehäuse relativ groß ausgebildet sein muss. Auch ist nachteilig, dass die bisher bekannten Ausgestaltungen nicht in einfacher Weise mit handelsüblichen Thermostatventilen kombiniert werden können, die bisher millionenfach im Einsatz sind.

Um einen hydraulischen Abgleich in einem fluidführenden Heizungs- oder Kühlsystem durchzuführen, ist es vorteilhaft, ein Ventil mit integrierter Druckregeleinrichtung an den einzelnen Verbrauchern zu installieren. Da die Mehrzahl der Ventile in den vorhandenen Bestandsanlagen ohne eine solche integrierte Druckregeleinrichtung verbaut sind, ist bisher der komplette Ersatz eines solchen üblichen Ventiles durch ein Ventil mit integrierter Druckregeleinrichtung erforderlich.

Aus der DE 102 56 035 B3 und auch aus der WO 2009/135490 A2 sind Ventile mit integrierter Druckregelung zum Regeln eines durch das Ventil strömenden Fluidstromes bekannt. Hierbei kann ein Voreinstellquerschnitt mittels zweier gegeneinander beweglicher Teile verändert werden und so der Fluidstrom auf einen maximalen Wert begrenzt werden. Allerdings benötigt diese Art der Voreinstellung einen zusätzlichen Bauraum im Ventil. Bei vorhandenen, handelsüblichen
Thermostatventilgehäusen, die ohne integrierte Druckregeleinrichtung aufgebaut sind, steht ein solcher zusätzlicher Einbauraum nicht zur Verfügung. Bei diesen Lösungen wird deshalb ein neues, auf die entsprechenden Bauteile abgestimmtes Gehäuse benötigt und installiert.

Aus der DE 10 2007 050 454 B4, insbesondere aus den Abbildungen gemäß Figur 3 und 4, sind Ausführungsformen von voreinstellbaren Durchflussregelventilen bekannt, bei denen die Druckregeleinrichtung als separates Bauteil unterhalb des Drosselkörpers und zugehörigem Sitz angeordnet ist. Auch hierbei wird ein zusätzlicher Bauraum benötigt. Ein Einbau in vorhandene, handelsübliche Thermostatventilgehäuse ohne integrierte Druckregeleinrichtung ist auch bei diesen Ausführungsformen nicht möglich. Es muss daher auch dann ein komplett neues, auf die Bauteile abgestimmtes Gehäuse verwendet werden.

Aus der DE 102 56 035 B3 und aus der WO 2009/135490 A2 sind zudem Ventile mit integrierter Druckregelung zum Regeln eines durch das Ventil strömenden Fluidstromes bekannt, bei denen die Sollwertfeder im Strömungskanal des Fluidstromes angeordnet ist. Des Weiteren ist auf der Spindel dieser Ventile eine Ventilfeder angeordnet. Bei diesen Lösungen wird ein jeweils neues, auf den speziellen Ventileinsatz abgestimmtes Gehäuse benötigt. Darüber hinaus ist bei diesen Lösungen die Sollwertfeder im Strömungskanal des Fluidstromes angeordnet, was einerseits den Querschnitt des Strömungskanals einengt und andererseits die Strömung im Strömungskanal durch die Ausbildung von Verwirbelungen beeinflusst, was sich insbesondere bei größeren Volumenströmen störend auswirkt.

Eine ähnliche Anordnung ist auch aus der DE 10 2007 050 454 B4 bekannt.

Ausgehend von diesem Stand der Technik liegt der Erfindung die Aufgabe zugrunde, ein Durchflussregelventil gattungsgemäßer Art zu schaffen, bei dem die Installation der erforderlichen Elemente in vorhandene, handelsübliche Thermostatventilgehäuse erfolgen kann, wobei trotz der dadurch vorgegebenen kompakten Außenabmessungen ein möglichst großer Volumenstrom durch das Durchflussregelventil fließen kann und wobei sichergestellt ist, dass trotz des Einbaus der entsprechenden Teile der Innenraum des Ventilgehäuses im Bereich der Rohranschlussgeometrien frei bleibt, also nicht durch eingebaute Elemente verdeckt wird.

Zur Lösung dieser Aufgabe schlägt die Erfindung vor, dass ein Ventileinsatz angeordnet ist, der in den Anschlussstutzen einsetzbar oder eingesetzt ist, mit einer darin integrierten membrangesteuerten, die Spindel koaxial umfassenden und axial auf dieser verschieblichen Druckregeleinrichtung, welche die Druckdifferenz zwischen den Druckbereichen vor und hinter der im Ventileinsatz integrierten Durchflussreguliereinheit konstant hält, die aus dem Ventilsitz und dem Drosselkörper besteht, wobei die in den Ventileinsatz integrierte Spindel ein aus dem Gehäuse und aus dem Ventileinsatz vorragendes Betätigungsteil und den auf ihr befestigten Drosselkörper aufweist, dass eine Sollwertfeder der Druckregeleinrichtung auf der dem Strömungskanal oder Spalt abgewandten Seite der Membrane und der dem Betätigungsteil der Spindel zugewandten Seite angeordnet ist, und dass eine Ventilfeder die Sollwertfeder koaxial umfasst.

Gemäß der Erfindung wird, um einen hydraulischen Abgleich in einem fluidführenden Heizungs- oder Kühlsystem durchzuführen, ein Ventil mit integrierter Druckregeleinrichtung an den einzelnen Verbrauchern installiert. Da die Mehrzahl der Ventile in den vorhandenen Bestandsanlagen ohne integrierte Druckregeleinrichtung verbaut sind, ist es vorteilhaft, wenn gemäß der Erfindung bei diesen Ventilen nur der Ventileinsatz gegen einen Ventileinsatz mit integrierter Druckregeleinrichtung getauscht wird. Dies ist beispielsweise mittels Montageschleusen auch unter Anlagendruck möglich. Hierdurch wird bei Bestandsanlagen mit geringem Aufwand ein hydraulischer Abgleich ermöglicht. Zudem wird dadurch, dass die Sollwertfeder auf der dem Strömungskanal abgewandten Seite der Membrane angeordnet wird und sie koaxial zwischen der Ventilfeder und der Betätigungsspindel angeordnet wird, bei kompakten Außenabmessungen dennoch ein möglichst großer Volumenstrom zur Verfügung gestellt, wobei die Strömung nicht von der Sollwertfeder beeinträchtigt wird.

Besonders bevorzugt ist vorgesehen, dass die Druckregeleinrichtung und die Durchflussregeleinrichtung samt Ventilfeder und Sollwertfeder als Bestandteile des Ventileinsatzes zu einer Montageeinheit unverlierbar miteinander verbunden sind, so dass der Ventileinsatz als komplette Einbaueinheit in das Gehäuse montierbar oder daraus demontierbar ist.

Hierdurch wird sowohl die kompakte Bauform gefördert, als auch die Handhabbarkeit.

Zudem ist bevorzugt vorgesehen, dass sich sowohl die Sollwertfeder als auch Ventilfeder auf einem gemeinsamen in dem Ventileinsatz befindlichen Halteelement abstützen.

Auch hierdurch wird die kompakte Bauform gefördert, die den Einbau in vorhandene Ventilgehäuse ermöglicht.

Bevorzugt ist hierbei vorgesehen, dass das Halteelement außerdem eine die Membrane stützende Kontur ausbildet, die einen Einbauraum für den äußeren Dichtwulst der Membrane bildet.

Zudem kann bevorzugt vorgesehen sein, dass Halteelement eine kraft- oder formschlüssige Verbindung zum Ventileinsatzgehäuse aufweist.

Auch kann vorgesehen sein, dass der Ventileinsatz oder das Ventileinsatzgehäuse mit einer Anschlussgeometrie für das Befestigen von Stellgliedern versehen ist, welche auf den Betätigungsteil der Ventilspindel wirken.

Zudem ist bevorzugt vorgesehen, dass der Sitz des Ventileinsatzes einen Kragen aufweist.

Eine besonders bevorzugte Weiterbildung wird darin gesehen, dass im Sitz des Ventileinsatzes unterhalb des ersten Drosselkörpers ein voreinstellbarer, zweiter Drosselkörper angeordnet ist.

Hierdurch ist in einfacher Weise die Voreinstellbarkeit des Durchflusses realisiert, ohne dass die Baugröße des Ventileinsatzes vergrößert wird.

Um Verschmutzungen zu vermeiden ist zudem vorgesehen, dass der Sitz des Ventileinsatzes ein Filtersieb aufweist.

Dabei kann bevorzugt vorgesehen sein, dass das Filtersieb auswechselbar angeordnet ist.

Ausführungsbeispiele der Erfindung sind in der Zeichnung dargestellt und im Folgenden näher beschrieben.

Es zeigt:
- Figur 1: ein erfindungsgemäßes Durchflussregelventil mit integrierter Druckregelung im Zusammenbau im Mittellängsschnitt gesehen, in zwei unterschiedlichen Einstellungen;
- Figur 2: den Ventileinsatz der Figur 1 ohne Gehäuse, ebenfalls in zwei unterschiedlichen Hubstellungen in Mittellängsschnitt gesehen;

- Figur 3: ein erfindungsgemäßes Durchflussregelventil mit integrierter Druckregelung im Zusammenbau im Mittelschnitt gesehen;
- Figur 4: einen erfindungsgemäßen Ventileinsatz mit großem Voreinstellwert ebenfalls im Mittellängsschnitt gesehen;
- Figur 5: den Schnitt A-A der Figur 4 mit drehfest auf dem Einstellring montiertem Handrad und einem daran ausgebildeten, mit einem Zeiger korrespondierenden Anschlag;
- Figur 6: zeigt den Ventileinsatz gemäß Figur4 mit kleinem Voreinstellwert ebenfalls im Mittellängsschnitt gesehen;
- Figur 7: zeigt eine Draufsicht auf den Ventileinsatz von oben gesehen;
- Figur 8: zeigt einen Ventileinsatz mit separatem Voreinstellelement und Anschlussgeometrien zum Befestigen eines Stellantriebes in einer Ansicht analog Figur 4 gesehen;
- Figur 9: ein erfindungsgemäßes Durchflussregelventil mit integrierter Druckregelung im Zusammenbau, im Mittellängsschnitt gesehen;
- Figur 10: einen erfindungsgemäßen Ventileinsatz mit separatem Voreinstellelement, ebenfalls im Mittellängsschnitt gesehen;
- Figur 11: eine Variante eines Ventileinsatzes mit separatem Voreinstellelement und Anschlussgeometrien zum Befestigen eines Stellantriebes, der auf die Spindel einwirken kann.

In der Zeichnung ist ein Durchflussregelventil 1 für flüssigkeitsführende Heizungs- oder Kühlanlagen gezeigt. Es besteht aus einem ein- oder mehrteiligen Gehäuse 2, welches im Ausführungsbeispiel einen Einlass 3 und einen Auslass 4 aufweist. Zwischen Einlass 3 und Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil aufweist. Auf das Gehäuse 2 ist ein Stellantrieb montierbar, wobei das Gehäuse eine Anschlussmöglichkeit 6 zum Anschließen eines solchen Stellantriebes aufweist.

Der Stellantrieb wirkt auf das obere Ende der Spindel 7 ein und damit auf die Durchflussreguliereinheit 8 oder Teilen derselben. Damit wird der Strömungskanal durch das Ventil bzw. den später noch beschriebenen Ventileinsatz im Querschnitt verändert. Die Druckregeleinrichtung 14 umfasst die Spindel 7 koaxial und ist auf ihr axial beweglich angeordnet.

Die Spindel 7 trägt an ihrem unteren Ende als Bestandteil einer ersten Drosseleinrichtung einen ersten Drosselkörper 9, der den Durchfluss bestimmt. Insbesondere besteht die Durchflussreguliereinheit 8 aus einer ersten Drosseleinrichtung mit dem an der Spindel 7 befestigten ersten Drosselkörper 9 und einem diesem zuzuordnenden Sitz 10. Ferner besteht die Durchflussreguliereinheit 8 aus einer zweiten Drosseleinrichtung, die aus einem auf der Spindel 7 längs dieser verstellbar angeordneten zweiten Drosselkörper 11 und einem diesem zuzuordnenden Sitz gebildet ist. Der zweite Drosselkörper 11 ist in Richtung auf den ersten Drosselkörper 9 zu diesem hin und von diesem weg beweglich. Hierdurch ist der Querschnitt des Strömungskanales durch das Durchflussregelventil 1 veränderbar.

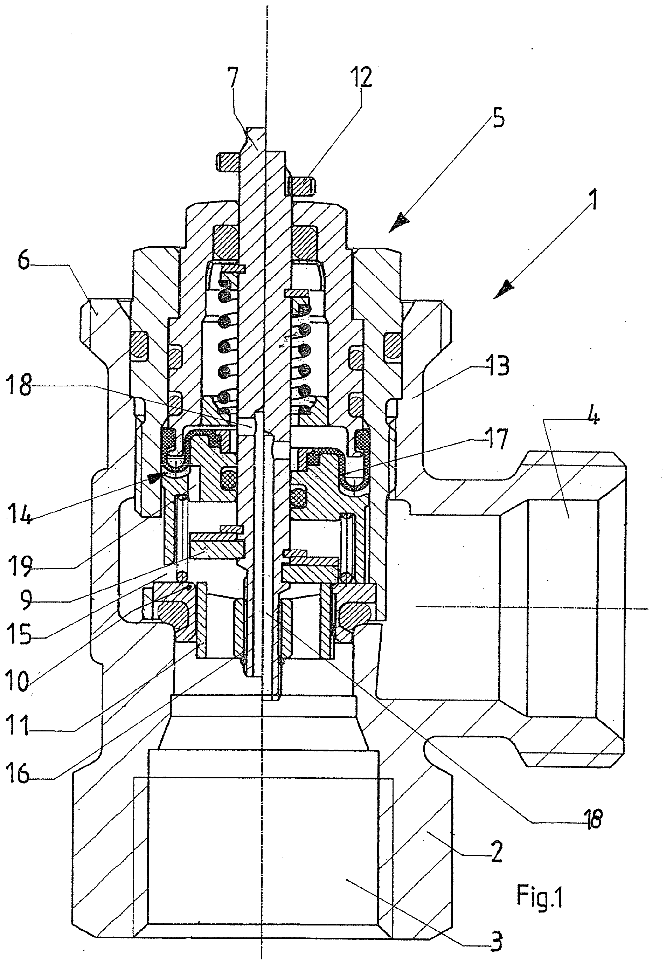

Insbesondere ist dabei auch vorgesehen, dass der erste Drosselkörper 9 gleichzeitig den Sitz für den zweiten Drosselkörper 11 bildet. Beispielsweise ist in der Figur 1 rechts eine Position gezeigt, in der die obere Randkante des zweiten Drosselkörpers 11 an der Unterseite des ersten Drosselkörpers 9 dichtend anliegend. In der Zeichnungsfigur links ist gezeigt, dass der zweite Drosselkörper 11 von dem ersten Drosselkörper 9 Abstand lässt, sodass ein Durchfluss über einen Spalt 15 zum Auslass 4 hin möglich ist.

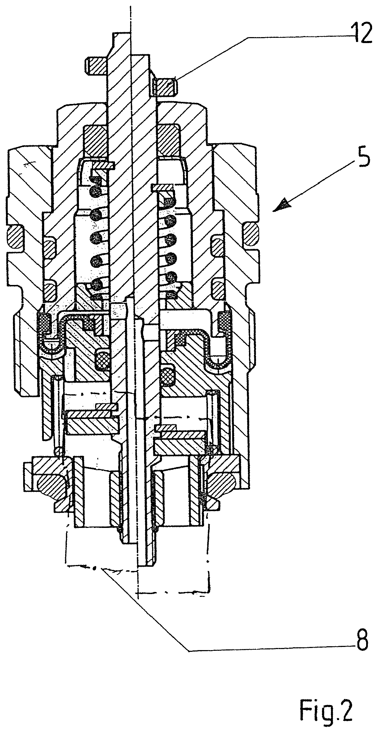

Wie insbesondere auch die Figur 2 zeigt, sind sämtliche Teile, nämlich die Druckregeleinrichtung 14, die Ventilspindel 7 mit ihrem ersten Drosselkörper 9, die Durchflussreguliereinheit 8 mit der ersten Drosseleinrichtung und der zweiten Drosseleinrichtung samt zweiten Drosselkörper 11 und den zugehörigen Sitzen für die Drosselkörper als Ventileinsatz 5 zu einer Montageeinheit zusammengefasst, die als solche komplett in den Anschlussstutzen 13 des Gehäuses 2 als komplette Einheit eingeschoben und montiert werden kann.

Die Einzelteile sind dabei miteinander unverlierbar verbunden. Diese Ausgestaltung ermöglicht es unter anderem auch, bei im Markt befindlichen Thermostatventilen mit nicht-dynamischen Ventileinsätzen einen Austausch vorzunehmen, in dem der vorhandene Ventileinsatz gegen den erfindungsgemäßen Ventileinsatz 5 ausgetauscht wird.

Die Spindel 7 weist an ihrem oben aus dem Gehäuse 2 bzw. dem Stutzen 13 bzw. dem Ventileinsatz 5 vorragenden Endbereich eine drehfest an ihr angebrachte Handhabe zur Einstellung der zweiten Drosseleinrichtung auf. Der zweite Drosselkörper 11 ist dazu mit der Spindel 7 über eine Gewindeverbindung 16 gekoppelt. Zusätzlich ist der zweite Drosselkörper 11 an einem Bestandteil des Ventileinsatzes 5 oder dem Sitz 10 für den ersten Drosselkörper 9 parallel zur Spindellängserstreckung verstellbar und unverdrehbar gehalten und geführt. Es ist somit möglich, durch Drehung der Spindel 7 mittels der Handhabe 12 den zweiten Drosselkörper 11 in Richtung der Spindellängserstreckung zu verstellen.

Vorzugsweise ist die Handhabe 12 lösbar an der Spindel 7 gehalten. Auch ist bevorzugt, dass die Handhabe 12 als Polygon ausgebildet ist und so eine Eingriffskontur für einen Stellschlüssel, beispielsweise einen Schraubenschlüssel bildet.

Zusätzlich ist vorgesehen, dass die Handhabe 12 mit ersten Markierungen für die Einstellposition versehen ist und am Gehäuse 2 oder vorzugsweise am Ventileinsatz 5 eine damit korrespondierende zweite Markierung vorgesehen ist. Damit ist es für den Benutzer in einfacher Weise möglich, die Voreinstellwerte genau einzustellen und abzulesen.

Die Druckregeleinrichtung 14 ist in an sich bekannter Weise ausgestaltet. Hierzu ist in einem Hohlraum des Ventileinsatzes 5 eine Membran 17 eingespannt gehalten, deren dem Betätigungsteil der Spindel 7 (in der Zeichnung oben) zugewandte Seite über einen in der Spindel 7 ausgebildeten ersten Kanal 18 mit dem Einlass 3 in leitungsoffener Verbindung steht. Deren der Durchflussreguliereinrichtung 8 zugewandte Seite steht über einen zweiten Kanal 19, der zur Durchflussreguliereinheit 8 hin offen ist, in Verbindung. In dieser Weise ist die Druckregelung in einfacher Weise in die Ausgestaltung des Ventileinsatzes 5 integriert.

Die Erfindung stellt ein Durchflussregelventil 1 zur Verfügung, welches durch den Ventileinsatz 5 mit allen funktionellen Bestandteilen die Möglichkeit schafft, solche Teile bei kleinen Abmessungen kostengünstig herzustellen. Insbesondere sind solche Ventileinsätze 5 auch gegen herkömmliche Ventileinsätze in üblichen Thermostatventilen austauschbar.

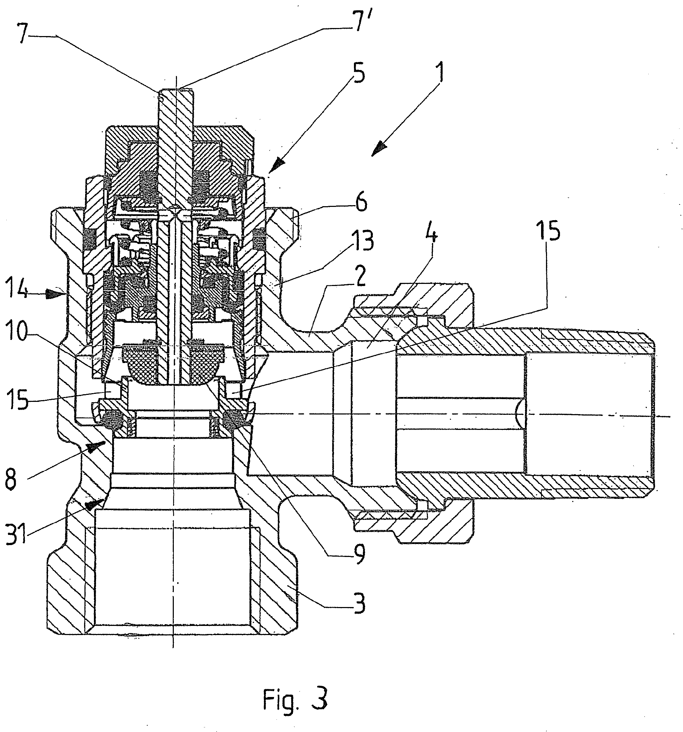

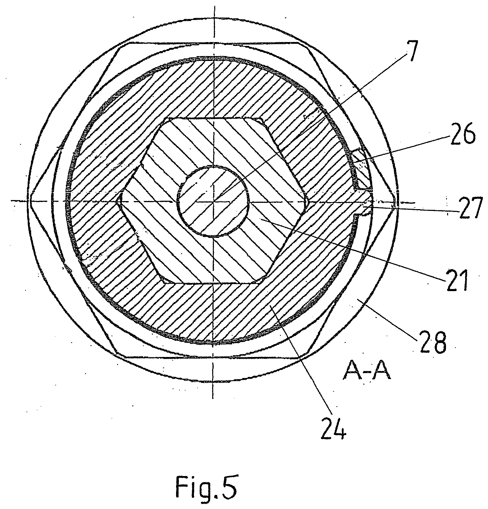

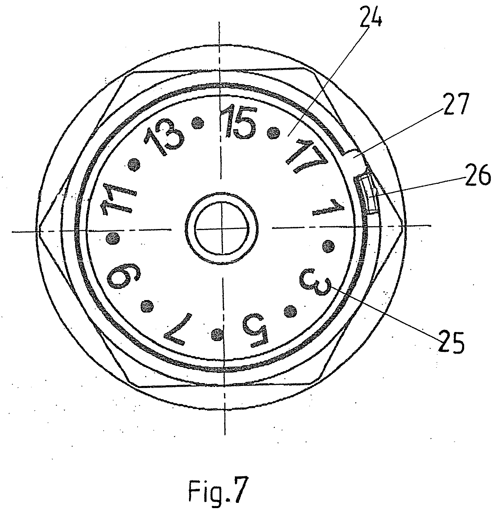

In der Zeichnung, insbesondere in den Figuren 3 bis 8, ist ein Durchflussregelventil 1 für flüssigkeitsführende Heizungs- oder Kühlanlagen gezeigt. Es besteht im Wesentlichen aus einem ein- oder mehrteiligen Gehäuse 2, welches einen Einlass 3 und einen Auslass 4 aufweist. Zwischen dem Einlass 3 und dem Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil 7'aufweist. Auf das Gehäuse 2 ist ein Stellantrieb montierbar, wobei das Gehäuse 2 eine Anschlussmöglichkeit 6 zum Anschließen eines solchen Stellantriebes aufweist. Der Stellantrieb wirkt auf das obere Ende 7'der Spindel 7 ein und damit auf die Durchflussreguliereinheit 8 oder Teile derselben. Damit wird der Strömungskanal durch das Ventil beziehungsweise den später noch beschriebenen Ventileinsatz im Querschnitt verändert.

Die Spindel trägt an ihrem unteren Ende einen ersten Drosselkörper 9, durch den der Durchfluss bestimmt wird. Die Durchflussreguliereinheit 8 besteht somit aus einer Drosseleinrichtung mit dem an der Spindel 7 befestigten Drosselkörper 9 und einem diesen zugeordneten Sitz 10. Der Drosselkörper 9 bildet mit dem Sitz 10 einen Abstandsspalt 15, der zum Auslass 4 hin offen ist, so dass ein entsprechender Durchfluss durch das Ventil möglich ist.

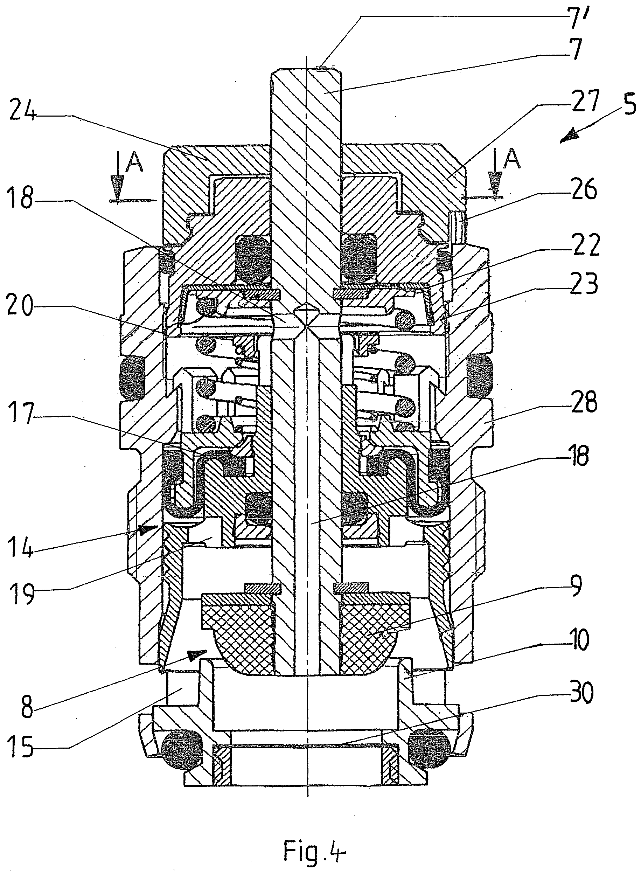

Wie insbesondere die Figuren 4,6 und 8 zeigen, sind sämtliche Teile, nämlich die Druckregeleinrichtung 14, die Spindel 7 mit dem Drosselkörper 9 und die Durchflussreguliereinheit 8 mit dem Sitz 10 als Ventileinsatz 5 zu einer Montageeinheit zusammengefasst, die als solche komplett in den Anschlussstutzen 13 des Gehäuses 2 als komplette Einheit eingeschoben und montiert werden kann. Die Einzelteile sind dabei miteinander unverlierbar verbunden. Diese Ausgestaltung ermöglicht es unter anderem, bei im Markt befindlichen Thermostatventilen mit nicht-dynamischen Ventileinsätzen einen Austausch vorzunehmen, in dem der vorhandene Ventileinsatz gegen den erfindungsgemäßen Ventileinsatz getauscht wird. In diesen Ventileinsatz 5 integriert ist zudem die Voreinstellung der Durchflussreguliereinheit 8, die mittels einstellbarer Hubbegrenzungmittel des Drosselkörpers 9 vorgenommen werden kann.

Die Druckregeleinrichtung 14 ist in an sich bekannter Weise ausgestaltet. Dabei ist in einem Hohlraum des Ventileinsatzes 5 eine Membran 17 eingespannt gehalten, deren dem Betätigungsteil der Spindel 7 (in der Zeichnung oben) zugewandte Seite über einen in der Spindel 7 ausgebildeten ersten Kanal 18 mit dem Einlass 3 in leitungsoffener Verbindung steht. Deren der Durchflussreguliereinrichtung 8 zugewandte Seite steht über einen zweiten Kanal 19, der zur Durchflussreguliereinheit 8 hin offen ist, in Verbindung. Somit ist in einfacher Weise die Druckregelung in die Ausgestaltung des Ventileinsatzes 5 integriert.

Der Ventileinsatz 5 weist besonders kompakte Außenabmessungen und damit eine möglichst geringe Eintauchtiefe in das Gehäuse 2 des Thermostatventiles auf, so dass die Rohranschlussgeometrien 13 des Gehäuses 2 nicht durch den Ventileinsatz 5 verdeckt werden, wenn der Ventileinsatz 5 als Einheit in das Gehäuse montiert oder daraus demontiert wird.

Durch die Hubbegrenzung des Drosselkörpers 9 wird eine Voreinstellung der Durchflussreguliereinheit 8 erreicht, so dass der Fluidstrom auf einen maximalen Wert begrenzt werden kann, der mit der eingestellten Hubhöhe des Drosselkörpers 9 korrespondiert.

Die Druckregeleinrichtung 14 umgreift die mit dem Drosselkörper 9 gekoppelte Spindel koaxial und ist auf dieser axial beweglich angeordnet, so dass wiederum eine kompakte montierbare Einheit besteht.

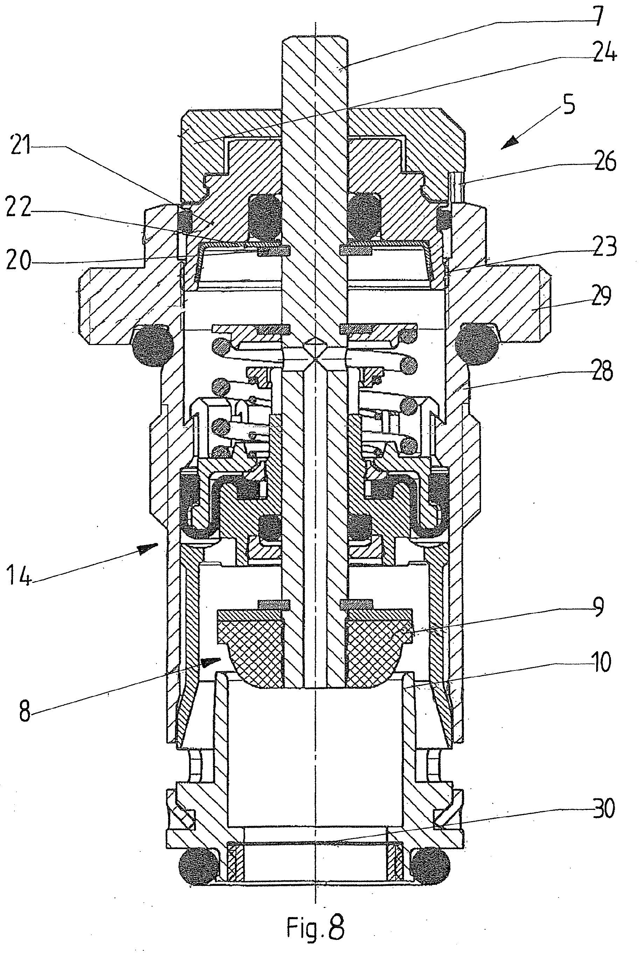

Zum Zwecke der Hubbegrenzung weist die Spindel 7 mindestens einen radial vorstehenden Kragen 20 oder Absatz auf, der mit einem an einem axial beweglichen Einstellring 21 angebrachten Anschlag 22 zur Anlage gelangen kann. Der axial bewegliche Einstellring 21 umgreift die Spindel 7 koaxial. Zusätzlich ist im Ausführungsbeispiel der Einstellring 21 mit einem Gewinde 23 versehen, welches die Drehbewegung in eine Hubbewegung umwandelt. Des Weiteren ist der Einstellring 21 mit einem daran drehfest gekoppelten Handrad 24 versehen. Dieses Handrad 24 weist eine Skala 25 zum Ablesen der Voreinstellwerte auf, die mit einem am Ventileinsatz 5 angebrachten Zeiger 26 korrespondiert. Die Drehbewegung des Handrades 24 wird durch einen an dem Handrad 24 ausgebildeten und mit dem Zeiger 26 korrespondierenden Anschlag 27 begrenzt. Zusätzlich kann das Ventileinsatzgehäuse 28, wie in Figur 8 gezeigt ist, mit einer Anschlussgeometrie 29 für das Befestigen von Stellgliedern versehen sein, welche auf das Betätigungsteil 7' der Spindel 7 einwirken.

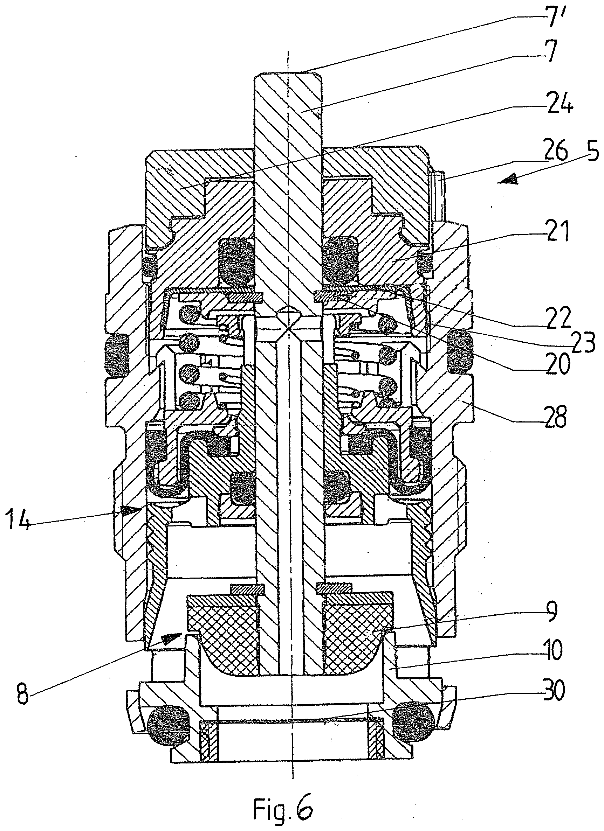

Zum Zwecke der Hubbegrenzung können die entsprechenden Elemente eingestellt werden, wie dies in den Zeichnungsfiguren ersichtlich ist, beispielsweise in eine Position gemäß Figur 4, die einen großen Voreinstellwert und somit einen großen Hub des Drosselkörpers 9 definiert oder aber, wie in Figur 6 gezeigt, kann die Hubbegrenzung entsprechend eingestellt werden, um einen kleinen Voreinstellwert zu bilden. Auch kann, wie in Figur 8 gezeigt ist, der Ventileinsatz 5 mit separatem Voreinstellelement und Anschlussgeometrien 29 zum Befestigen eines Stellantriebes ausgebildet sein.

Zusätzlich ist zur Vermeidung von Verschmutzungen, die die Funktion des Ventileinsatzes 5 beeinträchtigen könnten, vorgesehen, dass unterhalb des Ventilsitzes 10 des Ventileinsatzes 5 ein Filtersieb 30 vorgesehen ist, welches gegebenenfalls lösbar befestigt, also auswechselbar angeordnet ist.

Insbesondere durch die Ausbildung der Hubbegrenzungsmittel für den Hub des Drosselkörpers wird eine besonders kompakte Bauform des Ventileinsatzes 5 gefördert, so dass ein solcher Ventileinsatz 5 gegen herkömmliche Ventileinsätze in üblichen Thermostatventilen ausgetauscht werden kann.

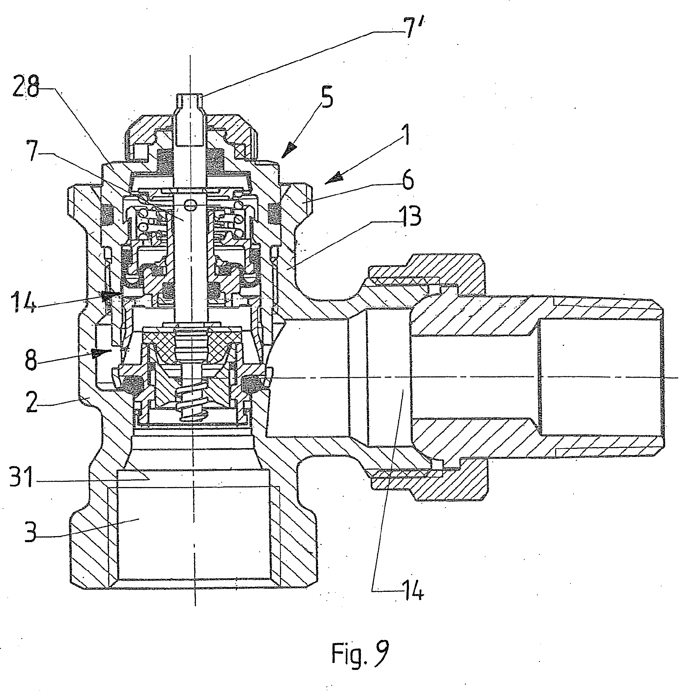

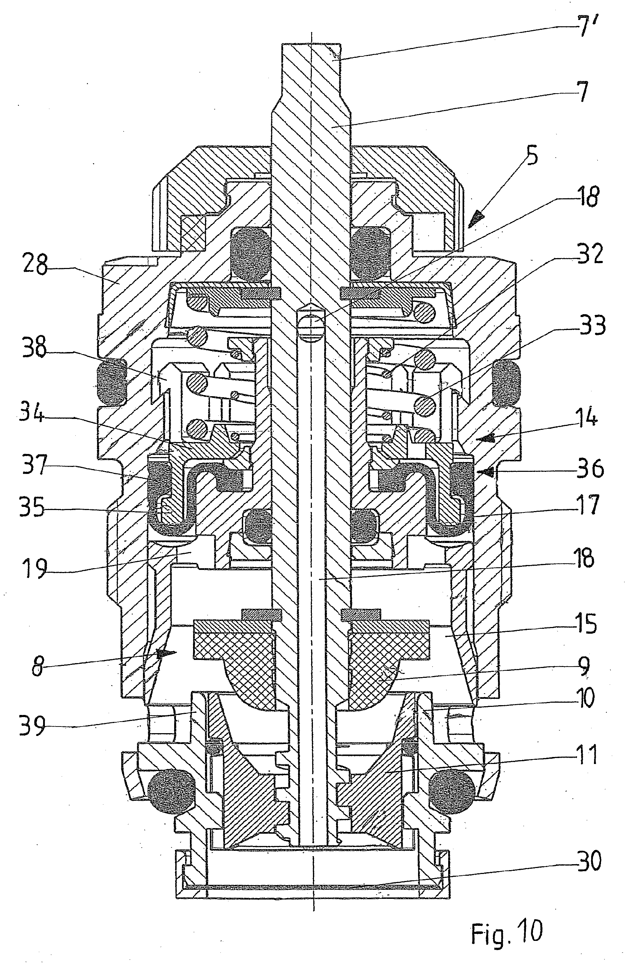

In der Zeichnung (Fig. 9 bis 11) ist ein Durchflussregelventil 1 für flüssigkeitsführende Heizungs- oder Kühlanlagen gezeigt. Es besteht aus einem ein- oder mehrteiligen Gehäuse 2, welches im Ausführungsbeispiel einen Einlass 3 und einen Auslass 4 aufweist. Zwischen Einlass 3 und Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil 7' aufweist. Auf das Gehäuse 2 ist beispielsweise ein Stellantrieb montierbar, wobei das Gehäuse 2 ein Anschlussmöglichkeit 6 zum Anschließen eines solchen Stellantriebes aufweist. Ein solcher Stellantrieb wirkt auf das obere Ende der Spindel 7 ein und damit auf die Durchflussreguliereinheit 8 oder Teile derselben. Damit wird der Strömungskanal durch das Ventil beziehungsweise den später noch beschriebenen Ventileinsatz im Querschnitt verändert.

Die Spindel 7 trägt an ihrem unteren Ende als Bestandteil einer ersten Drosseleinrichtung einen ersten Drosselkörper 9, der den Durchfluss bestimmt. Insbesondere besteht die Durchflussreguliereinheit 8 aus einer ersten Drosseleinrichtung mit dem an der Spindel 7 befestigten ersten Drosselkörper 9 und einem diesen zuzuordnenden Sitz 10. Ferner besteht die Durchflussreguliereinrichtung aus einer zweiten Drosseleinrichtung, die aus einem in einem Kragen 39 axial verstellbar angeordneten zweiten Drosselkörper 11 besteht, der dem Drosselkörper 9 zugeordnet ist. Je nach Einstellung des zweiten Drosselkörpers 11 relativ zum ersten Drosselkörper 9 ist der Querschnitt des Strömungsspaltes 15 veränderbar.

Sämtliche Teile, nämlich die Druckregeleinrichtung 14, die Ventilspindel 7 mit ihrem Drosselkörper 9, die Durchflussreguliereinheit 8 mit der ersten Drosseleinrichtung und der zweiten Drosseleinrichtung samt zweiten Drosselkörper 11 und den zugehörigen Sitzen für die Drosselkörper als Ventileinheit 5 zu einer Montageeinheit zusammengefasst, die als solche komplett in den Anschlussstutzen 13 des Gehäuses 2 als Einheit eingeschoben und montiert werden kann oder auch demontiert werden kann. Die Einzelteile sind dabei miteinander unverlierbar verbunden. Diese Ausgestaltung ermöglicht es unter anderem auch, bei im Markt befindlichen Thermostatventilen mit nicht-dynamischen Ventileinsätzen einen Austausch vorzunehmen, indem der vorhandene Ventileinsatz gegen den Erfindungs- Ventileinsatz 5 ausgetauscht wird.

Die in den Ventileinsatz 5 integrierte Druckregeleinrichtung 14 ist in an sich bekannter Weise ausgestaltet. Hierzu ist in einem Hohlraum des Ventileinsatzes 5 eine Membran 17 eingespannt gehalten, deren den Betätigungsteil der Spindel 7 (in der Zeichnung oben) zugewandten Seite über einen in der Spindel 7 ausgebildeten ersten Kanal 18 mit dem Einlass 3 in leitungsoffener Verbindung steht. Deren der Durchflussreguliereinrichtung 8 zugewandten Seite steht über einen zweiten Kanal 19, der zur Durchflussreguliereinheit 8 hin offen ist, in Verbindung. In dieser Weise ist die Druckregelung in einfacher Weise in die Ausgestaltung des Ventileinsatzes 5 integriert.

Des Weiteren ist eine Sollwertfeder 32 der Druckreguliereinrichtung 14 auf der dem Strömungskanal oder Spalt 15 abgewandten Seite der Membran 17 und der dem Betätigungsteil 7' der Spindel 7 zugewandten Seite angeordnet. Des Weiteren ist eine Ventilfeder 33 angeordnet, die die Sollwertfeder 32 koaxial umfasst. Auf diese Weise ist der Einbauraum für beide Federn klein gehalten, so dass die kompakte Bauform des Ventileinsatzes 5 erreicht wird und erreicht wird, dass dieser in vorhandene Ventilgehäuse oben angegebener Art eingebaut werden kann.

Insbesondere ist so die Druckregeleinrichtung 14 und die Durchflussregeleinrichtung 8 samt Ventilfeder 33 und Sollwertfeder 32 als Bestandteil des Ventileinsatzes 5 zu einer Montageeinheit unverlierbar miteinander verbunden, so dass der Ventileinsatz 5 als komplette Einbaueinheit in das Gehäuse 2 montierbar oder daraus montierbar ist.

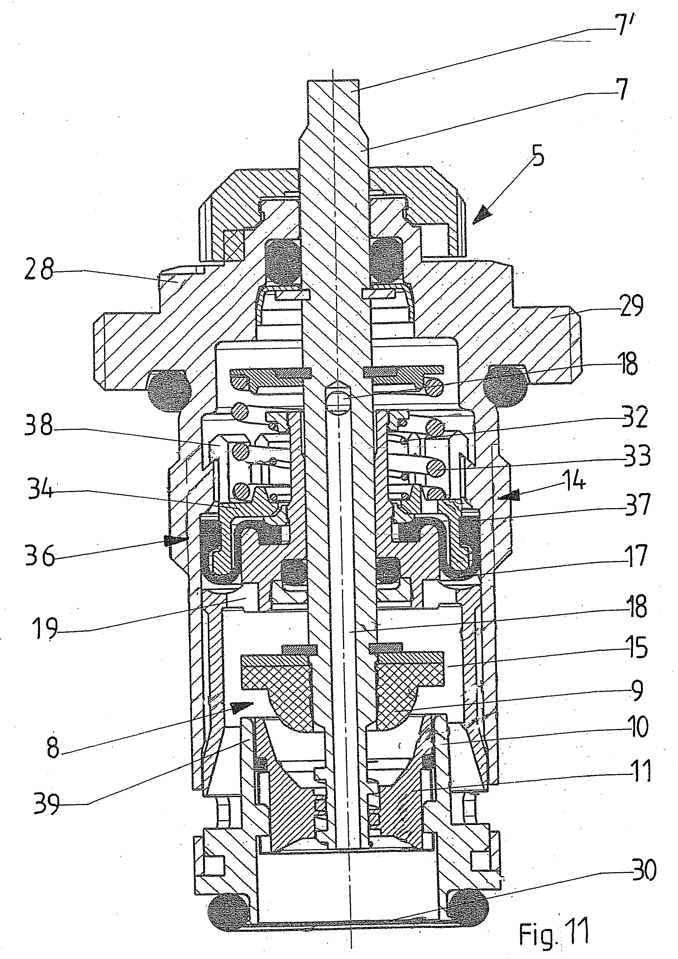

Im Ausführungsbeispiel stützen sich sowohl die Sollwertfeder 32 als auch die Ventilfeder 33 auf einem gemeinsamen in dem Ventileinsatz 5 befindlichen Halteelement 34 ab, was für die kompakte Bauform förderlich ist. Dieses Halteelement 34 bildet außerdem eine die Membran 17 stützende Kontur 35 aus, die einen Einbauraum 36 für den äußeren Dichtwulst 37 der Membrane 17 bildet. Das Halteelement 34 ist durch eine kraft- oder formschlüssige Verbindung 38 mit dem Ventileinsatzgehäuse 28 verbunden. Im Ausführungsbeispiel gemäß Figur 11 weist der Ventileinsatz 5 beziehungsweise das Ventileinsatzgehäuse 28 eine Anschlussgeometrie 29 für das Befestigen von Stellgliedern auf, welche auf dem Betätigungsteil 7' der Ventilspindel 7 einwirken können.

Zusätzlich weist der Sitz 10 des Ventileinsatzes 5 einen Kragen 39 auf. In diesem Kragen ist unterhalb des ersten Drosselkörpers 9 ein voreinstellbarer zweiter Drosselkörper 11 angeordnet. Dieser ist geeigneter Weise axial verstellbar, beispielsweise durch Drehung der mit dem Drosselkörper 11 gekoppelten Spindel 7.

Zusätzlich ist der Sitz 10 des Ventileinsatzes 5 auf seiner Unterseite mit einem Filtersieb 30 ausgestattet, welches vorzugsweise auswechselbar angeordnet ist.

Die Erfindung ist nicht auf die Ausführungsbeispiele beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichenliste:

- 1: Durchflussregelventil
- 2: Gehäuse
- 3: Einlass
- 4: Auslass
- 5: Ventileinsatz
- 6: Anschlussmöglichkeit (für Stellantrieb)
- 7: Spindel
- 7': Spindelende
- 8: Durchflussreguliereinheit
- 9: erster Drosselkörper
- 10: Sitz für 9
- 11: zweiter Drosselkörper
- 12: Handhabe
- 13: Anschlussstutzen
- 14: Druckregeleinrichtung
- 15: Spalt
- 16: Gewindeverbindung
- 17: Membran
- 18: erster Kanal
- 19: zweiter Kanal
- 20: Kragen
- 21: Einstellring
- 22: Anschlag
- 23: Gewinde
- 24: Handrad
- 25: Skala
- 26: Zeiger
- 27: Anschlag für 26
- 28: Ventileinsatzgehäuse
- 29: Anschlussgeometrie
- 30: Filtersieb
- 31: Rohranschlussgeometrie
- 32: Sollwertfeld
- 33: Ventilfeder
- 34: Halteelement
- 35: Kontur

## Patentansprüche

1. Durchflussregelventil (1) für flüssigkeitsführende Heizungs- oder Kühlanlagen, bestehend aus einem Gehäuse (2) mit mindestens einem Einlass (3) und mindestens einem Auslass (4) und einem dazwischen angeordneten Anschlussstutzen (13), in den eine Druckregeleinrichtung (14), welche die Druckdifferenz zwischen den Druckbereichen vor und hinter einer im Anschlussstutzen angeordneten Durchflussreguliereinheit (8) konstant hält, sowie eine Spindel (7) mit aus dem Gehäuse (2) ragendem Betätigungsteil (7') und im Gehäuse (2) befindlichen ersten Drosselkörper (9) eingesetzt ist, der auf die Durchflussreguliereinheit (8) oder auf Teile davon einwirkt, **dadurch gekennzeichnet, dass** ein Ventileinsatz (5) angeordnet ist, der in den Anschlussstutzen (13) einsetzbar oder eingesetzt ist, mit einer darin integrierten membrangesteuerten, die Spindel (7) koaxial umfassenden und axial auf dieser verschieblichen Druckregeleinrichtung (14), welche die Druckdifferenz zwischen den Druckbereichen vor und hinter der im Ventileinsatz (5) integrierten Durchflussreguliereinheit (8) konstant hält, die aus dem Ventilsitz (10) und dem Drosselkörper (9) besteht, wobei die in den Ventileinsatz (5) integrierte Spindel (7) ein aus dem Gehäuse (2) und aus dem Ventileinsatz (5) vorragendes Betätigungsteil (7') und den auf ihr befestigten Drosselkörper (9) aufweist, dass eine Sollwertfeder (32) der Druckregeleinrichtung (14) auf der dem Strömungskanal oder Spalt (15) abgewandten Seite der Membrane (17) und der dem Betätigungsteil (7') der Spindel (7) zugewandten Seite angeordnet ist, und dass eine Ventilfeder (33) die Sollwertfeder (32) koaxial umfasst.

2. Durchflussregelventil nach Anspruch 1, **dadurch gekennzeichnet, dass** die Druckregeleinrichtung (14) und die Durchflussregeleinrichtung (8) samt Ventilfeder (33) und Sollwertfeder (32) als Bestandteile des Ventileinsatzes (5) zu einer Montageeinheit unverlierbar miteinander verbunden sind, so dass der Ventileinsatz (5) als komplette Einbaueinheit in das Gehäuse (2) montierbar oder daraus demontierbar ist.

3. Durchflussregelventil nach einem der Ansprüche 1 oder 2, **dadurch gekennzeichnet, dass** sich sowohl die Sollwertfeder (32) als auch Ventilfeder (33) auf einem gemeinsamen in dem Ventileinsatz (5) befindlichen Halteelement (34) abstützen.

4. Durchflussregelventil nach Anspruch 3, **dadurch gekennzeichnet, dass** das Halteelement (34) außerdem eine die Membrane (17) stützende Kontur (35) ausbildet, die einen Einbauraum (36) für den äußeren Dichtwulst (37) der Membrane (17) bildet.

5. Durchflussregelventil nach Anspruch 3 oder 4, **dadurch gekennzeichnet, dass** Halteelement (34) eine kraft- oder formschlüssige Verbindung (38) zum Ventileinsatzgehäuse (22) aufweist.

6. Durchflussregelventil nach einem der Ansprüche 1 bis 5, **dadurch gekennzeichnet, dass** der Ventileinsatz (5) oder das Ventileinsatzgehäuse (28) mit einer Anschlussgeometrie (29) für das Befestigen von Stellgliedern versehen ist, welche auf den Betätigungsteil (7') der Ventilspindel (7) wirken.

7. Durchflussregelventil nach einem der Ansprüche 1 bis 6, **dadurch gekennzeichnet, dass** der Sitz (10) des Ventileinsatzes (5) einen Kragen (39) aufweist.

8. Durchflussregelventil nach einem der Ansprüche 1 bis 7, **dadurch gekennzeichnet, dass** im Sitz (10) des Ventileinsatzes (5) unterhalb des ersten Drosselkörpers (9) ein voreinstellbarer, zweiter Drosselkörper (11) angeordnet ist.

9. Durchflussregelventil nach einem der Ansprüche 1 bis 8, **dadurch gekennzeichnet, dass** der Sitz (10) des Ventileinsatzes (5) ein Filtersieb (30) aufweist.

10. Durchflussregelventil nach Anspruch 9, **dadurch gekennzeichnet, dass** das Filtersieb (30) auswechselbar angeordnet ist.

## Claims

1. A flow-control valve (1) for liquid-conveying heating or cooling systems, comprising a housing (2) with at least one inlet (3) and at least one outlet (4) and a connector pipe (13) disposed therebetween, wherein is fitted a pressure regulating device (14) keeping constant the pressure differential between the pressure regions upstream and downstream of a flow-control unit (8) disposed in the connector pipe, as well as a spindle (7) with an actuation part (7') protruding from the housing (2) and a first throttle body (9) located in the housing (2) and acting on the flow-control unit (8) or on parts thereof, **characterized by that** a valve cartridge (5) is disposed that is insertable or inserted into the connector pipe (13), with a membrane-controlled pressure regulating device (14) integrated therein, coaxially enclosing the spindle (7) and being axially displaceable thereon, which keeps constant the pressure differential between the pressure regions upstream and downstream of the flow-control unit (8) integrated in the valve cartridge (5), said flow-control unit (8) being comprised of the valve seat (10) and the throttle body (9), the spindle (7) integrated in the valve cartridge (5) including an actuation part (7') protruding from the housing (2) and from the valve cartridge (5) and the throttle body (9) fixed thereon, that a setpoint spring (32) of the pressure regulating device (14) is disposed on the side of the membrane (17) facing away from the flow channel or gap (15) and on the side facing the actuation part (7') of the spindle (7), and that a valve spring (33) coaxially encloses the setpoint spring (32).

2. The flow-control valve according to claim 1, **characterized by that** the pressure regulating device (14) and the flow-control unit (8) together with the valve spring (33) and the setpoint spring (32) are captively connected to each other as components of the valve cartridge (5) so to form a mounting unit, so that the valve cartridge (5) can be mounted in the housing (2) or can be dismounted therefrom as a complete mounting unit.

3. The flow-control valve according to one of claims 1 or 2, **characterized by that** the setpoint spring (32) as well as the valve spring (33) are supported on a common holding element (34) located in the valve cartridge (5).

4. The flow-control valve according to claim 3, **characterized by that** the holding element (34) further exhibits a contour (35) supporting the membrane (17) that forms a mounting space (36) for the outer sealing bead (37) of the membrane (17).

5. The flow-control valve according to claim 3 or 4, **characterized by that** the holding element (34) includes a friction or form-fit connection (38) to the valve cartridge housing (22).

6. The flow-control valve according to one of claims 1 to 5, c**haracterized by that** the valve cartridge (5) or the valve cartridge housing (28) is provided with a connection geometry (29) for attaching actuators, which act on the actuation part (7') of the valve spindle (7).

7. The flow-control valve according to one of claims 1 to 6, **characterized by that** the seat (10) of the valve cartridge (5) includes a collar (39).

8. The flow-control valve according to one of claims 1 to 7, **characterized by that** in the seat (10) of the valve cartridge (5) below the first throttle body (9) a pre-settable, second throttle body (11) is disposed.

9. The flow-control valve according to one of claims 1 to 8, **characterized by that** the seat (10) of the valve cartridge (5) includes a filter screen (30).

10. The flow-control valve according to claim 9, **characterized by that** the filter screen (30) is disposed in an interchangeable manner.

## Revendications

1. Robinet (1) permettant de régler le débit pour des systèmes de chauffage ou de refroidissement de transfert de liquide, comprenant un boîtier (2) avec au moins une entrée (3) et au moins une sortie (4) et un embout de raccordement (13) disposé entre celles-ci, dans lequel est inséré un dispositif (14) de régulation de la pression maintenant constante la différence de pression entre les régions de pression en amont et en aval d'une unité (8) de régulation de la pression disposée dans l'embout de raccordement, aussi bien qu'une broche (7) avec un organe d'actionnement (7') faisant saillie du boîtier (2) et un premier étrangleur (9) se trouvant dans le boîtier (2) agissant sur l'unité (8) de régulation de la pression ou sur des parties de celle-ci, **caractérisé en ce qu'**un boisseau (5) est disposé qui est insérable ou inséré dans l'embout de raccordement (13), avec un dispositif (14) de régulation de la pression commandé par membrane et intégré là-dedans, qui entoure coaxialement la broche (7) et est axialement déplaçable sur celle-ci, qui maintient constante la différence de pression entre les régions de pression en amont et en aval de l'unité (8) de régulation de la pression intégrée dans le boisseau (5), cette unité (8) de régulation de la pression étant comprise du siège (10) du robinet et l'étrangleur (9), la broche (7) intégrée dans le boisseau (5) comportant un organe d'actionnement (7') faisant saillie du boîtier (2) et du boisseau (5) et l'étrangleur (9) attaché sur celle-ci, qu'un ressort (32) de la valeur de consigne du dispositif (14) de régulation de la pression est disposé au côté de la membrane (17) à l'opposé du canal de débit ou de la fente (15) et au côté en vis-à-vis de l'organe d'actionnement (7') de la broche (7), et qu'un ressort (33) du robinet coaxialement entoure le ressort (32) de la valeur de consigne.

2. Robinet permettant de régler le débit selon la revendication 1, **caractérisé en ce que** le dispositif (14) de régulation de la pression et l'unité (8) de régulation de la pression ensemble avec le ressort (33) du robinet et le ressort (32) de la valeur de consigne sont liés prisonniers l'un à l'autre comme des composants du boisseau (5) pour former une unité de montage, de façon que le boisseau (5) puisse être monté dans le boîtier (2) ou puisse être démonté de celui-ci comme unité de montage complète.

3. Robinet permettant de régler le débit selon une des revendications 1 ou 2, **caractérisé en ce que** le ressort (32) de la valeur de consigne aussi bien que le ressort (33) du robinet prennent appui sur un élément de maintien (34) commun se trouvant dans le boisseau (5).

4. Robinet permettant de régler le débit selon la revendication 3, **caractérisé en ce que** l'élément de maintien (34) en outre comporte un contour (35) supportant la membrane (17) qui réalise un espace de montage (36) pour le bourrelet (37) d'étanchéité extérieur de la membrane (17).

5. Robinet permettant de régler le débit selon la revendication 3 ou 4, **caractérisé en ce que** l'élément de maintien (34) comporte un liage (38) à force ou à forme au boîtier du boisseau (22).

6. Robinet permettant de régler le débit selon une des revendications 1 à 5, **caractérisé en ce que** le boisseau (5) ou le boîtier (28) du boisseau est pourvu d'une géométrie de liage (29) pour attacher des actionneurs, qui agissent sur l'organe d'actionnement (7') de la broche (7) du robinet.

7. Robinet permettant de régler le débit selon une des revendications 1 à 6, **caractérisé en ce que** le siège (10) du boisseau (5) comporte une collerette (39).

8. Robinet permettant de régler le débit selon une des revendications 1 à 7, **caractérisé en ce que** dans le siège (10) du boisseau (5) au-dessous du premier étrangleur (9) un deuxième étrangleur (11) de présélection est disposé.

9. Robinet permettant de régler le débit selon une des revendications 1 à 8, **caractérisé en ce que** le siège (10) du boisseau (5) comporte un tamis de filtrage (30).

10. Robinet permettant de régler le débit selon la revendication 9, **caractérisé en ce que** le tamis de filtrage (30) est disposé de façon interchangeable.
